# FASCICULE DE BREVET EUROPEEN

(11) **EP 1 894 322 B1**
(45) Date de publication et mention de la délivrance du brevet: **17.08.2011**
(21) Numéro de dépôt: 06778942.0
(22) Date de dépôt: 15.06.2006
(51) Int. Cl.: H04B 7/185

(54) **SYSTEME DE COMMUNICATION PAR SATELLITES A DIVERSITE DE STATION EN EMISSION**
SATELLITENKOMMUNIKATIONSSYSTEM MIT SENDESTATIONSDIVERSITÄT
SATELLITE COMMUNICATIONS SYSTEM HAVING TRANSMITTING STATION DIVERSITY

(30) Priorité: 21.06.2005 FR 0551683
(43) Date de publication de la demande: 05.03.2008
(73) Titulaire: Thales, 92 Neuilly sur Seine (FR)
(72) Inventeur: RIGAL, Christian, F-31120 Portet sur Garonne (FR)
(74) Mandataire: Esselin, Sophie
(86) Numéro de dépôt international: PCT/FR2006/050564
(87) Numéro de publication internationale: WO 2006/136746

(56) Documents cités:
- EP-A- 0 936 766
- US-A1- 2001 021 195
- US-A1- 2002 003 495

## Description

L'invention concerne le domaine des communications par satellites.

L'invention s'applique aux systèmes de télécommunications utilisant une technique de transmission dite à accès multiples par répartition de fréquence, cette technique étant connue sous l'acronyme FDMA (Frequency Division Multiple Access).

L'émission ou la réception de signaux via un satellite se fait au moyen de stations de connexion (Gateways) réparties sur la surface de la terre. Pour permettre des accès par des systèmes de transmission large bande, les stations de connexion sont surdimensionnées dans la partie radiofréquence (RF) et en conséquence ont un coût élevé. Malgré cela, la plupart des bilans montrent que la voie montante (sens émission) conserve une part non négligeable d'indisponibilité liée aux mauvaises conditions atmosphériques (à la pluie), en particulier pour des liaisons à partir de 30 GHz.

Les clients potentiels de ces systèmes sont désireux d'une amélioration du service.

Pour résoudre ce problème, le Déposant propose d'implémenter une solution consistant à apporter une diversité de site en émission.

Des solutions pour implémenter une diversité existent déjà pour la réception des signaux via un satellite.

Cependant dans le cas présent, il s'agit d'implémenter une diversité de site pour la voie montante c'est-à-dire en émission ce qui pose un problème particulier.

En effet, les démodulateurs des terminaux fonctionnent sur une porteuse supposée cohérente et continue. En conséquence, toute perte de synchronisation de phase ou temporelle induit l'équivalent d'un saut de cycle avec un paquet d'erreurs important ce qui peut produire un retour au mode acquisition du terminal avec re-connexion des utilisateurs.

Ainsi pour implémenter de la diversité de site à l'émission dans ce type de système, le problème identifié par le Déposant est le basculement du signal entre deux sites distants, les distances des sites pouvant par exemple être d'environ 5 à 30 km, tout en s'assurant que la porteuse ait le même délai et la même phase à la réception par les terminaux. La solution doit pouvoir s'appliquer à des fréquences porteuses pouvant être de 30 GHz, éventuellement de 14 GHz (en pratique à toute fréquence porteuse).

A cette fin, l'invention propose une solution consistant à utiliser une première et une deuxième station de connexion distante, à asservir les signaux de la première et de la deuxième station de connexion de façon à basculer de l'une à l'autre en cas de pluie intense sans perte la synchronisation pour la porteuse.

L'invention ne nécessite aucune implémentation particulière au niveau du démodulateur des terminaux, respectant les contraintes de coûts liées à ces marchés.

L'invention a plus particulièrement pour objet un procédé d'émission de signaux dits signaux utiles via un satellite au moyen de stations de connexions, l'émission se faisant dans une bande de transmission définie principalement caractérisé en ce qu'il comprend pour une première station de connexion les étapes suivantes :
- la génération d'un premier signal de service sur une fréquence porteuse de service dénommé signal pilote, et la transmission de ce signal pilote à au moins une deuxième station de connexion ;
- l'utilisation de ce signal pilote pour assurer une synchronisation de phase et temporelle des signaux afin de mettre en oeuvre une diversité en émission c'est-à-dire de basculer l'émission du signal utile par cette deuxième station de connexion sans perte de synchronisation de phase entre les deux stations.

Selon une autre caractéristique, le procédé consiste à allouer une partie de la bande de transmission au ou aux signaux de service notamment au signal pilote.

De façon pratique, la première station de connexion génère - un signal utile par modulation d'une fréquence porteuse à partir d'un signal d'entrée et - une fréquence porteuse de transmission le procédé comprend alors les étapes suivantes :
- La distribution de la fréquence porteuse de transmission entre les deux stations de connexion,
- La distribution du signal pilote entre les deux stations de connexion avec un déphasage de 180°;
- L'observation des niveaux d'au moins le signal pilote en sortie du transpondeur du satellite par réception depuis la première station de connexion afin de détecter de mauvaises conditions de transmission;
- Le basculement du signal utile vers la deuxième station de connexion avec un déphasage à 180 ° de manière à être en phase avec la porteuse utile de la première station de connexion;
- Le remplacement de la fréquence porteuse utile de la première station par le signal pilote déphasé de 180°.

Selon une autre caractéristique, le procédé comprend en outre la génération d'un deuxième signal de service dénommé signal de test pour permettre de passer en mode calibration, ce mode consistant réaliser un équilibrage des chemins de la fréquence porteuse de transmission distribuée sur la première et la deuxième station de connexion.

Avantageusement, le mode calibration est déclenché en dehors d'un passage en diversité d'émission, et consiste à :
- coupler le signal utile au signal de test et l'émettre par la première station de connexion à la fréquence porteuse de transmission,
- distribuer la fréquence porteuse de transmission et le signal pilote à la deuxième station de connexion,
- basculer en mode émission par la deuxième station de connexion, qui reçoit alors le signal de test à la place du signal utile, couplée au signal pilote déphasée de 180°,
- traitement du signal retour pour contrôler la valeur du déphasage.

L'invention a également pour objet, un système d'émission de signaux dits signaux utiles, via un satellite au moyen de stations de connexion, l'émission se faisant dans une bande de transmission définie principalement caractérisé en ce qu'il comprend des moyens de mise en oeuvre de la diversité en émission entre au moins deux stations de connexion comprenant :
- des moyens de génération d'un premier signal de service dénommé signal pilote,
- des moyens de distribution de ce signal pilote sur les deux stations de connexion pour assurer une synchronisation de phase et temporelle des signaux permettant ainsi de pouvoir basculer l'émission du signal utile par la deuxième station de connexion sans perte de synchronisation de phase entre les deux stations,
- des moyens de basculement en émission par la deuxième station.

Selon une autre caractéristique, les moyens de distribution comportent :
- un canal assurant la liaison avec la deuxième station de connexion,
- un déphaseur suivi d'un circuit à retard variable dans la première station de connexion pour opérer un déphasage et introduire un délai définis sur le signal pilote transmis avec le signal utile mélangé à la fréquence de transmission à l'émetteur de cette station.
- un déphaseur dans le canal de liaison pour opérer le même déphasage sur le signal pilote lorsque ce dernier est couplé au signal utile pour être transmis à l'émetteur de la deuxième station de connexion.

Selon une autre caractéristique, les moyens de basculement (diversité en émission) comportent :
- un premier commutateur dans la première station de connexion permettant la transmission du signal pilote couplé au signal utile ou la transmission du signal pilote à l'émetteur de cette première station ;
- un deuxième commutateur dans le canal de liaison pour la transmission du signal pilote couplé au signal utile ou la transmission du signal pilote à l'émetteur de la deuxième station de connexion ;
- un organe de commande de ces deux commutateurs.

Avantageusement, les déphaseurs comprennent chacun, deux coupleurs à 90° de manière à obtenir une opposition de phase entre les signaux distribués aux deux stations de connexion.

Selon une autre caractéristique le système comprend en outre des moyens de génération d'un deuxième signal de service dénommé fréquence signal de test ; des moyens de distribution de ce signal de test sur la première et la deuxième station de connexion, et des moyens de basculement en mode calibration, tous ces moyens permettant de réaliser un équilibrage des chemins de la fréquence porteuse de transmission distribuée sur la première et la deuxième station de connexion.

L'invention concerne également une station de connexion comprenant un émetteur apte à émettre un signal utile dans une bande de transmission définie, caractérisée en ce qu'elle comprend :
- des moyens de génération d'au moins un premier signal de service dénommé signal pilote,
- des moyens de distribution de ce signal pilote vers son émetteur et vers un canal de liaison à au moins une autre station de connexion,
- des moyens de transmission de ce signal pilote dans la bande de transmission définie,
- des moyens de basculement en émission par la deuxième station.

Selon une autre caractéristique, les moyens de distribution comportent un premier commutateur permettant la transmission du signal pilote couplé au signal utile ou la transmission du signal pilote, à l'émetteur.

D'autres particularités et avantages de l'invention apparaîtront clairement à la lecture de la description qui est faite ci-après et qui est donnée à titre d'exemple illustratif et non limitatif et en regard des figures sur lesquelles :
- La figure 1 représente le schéma de principe d'un dispositif permettant de mettre en oeuvre la diversité de station de connexion en émission dans une configuration d'émission par la première station,
- la figure 2 représente le schéma du dispositif selon la figure 1 dans un fonctionnement en émission par la deuxième station,
- La figure 3, représente le schéma du dispositif selon la figure 1 dans un fonctionnement en mode calibration.

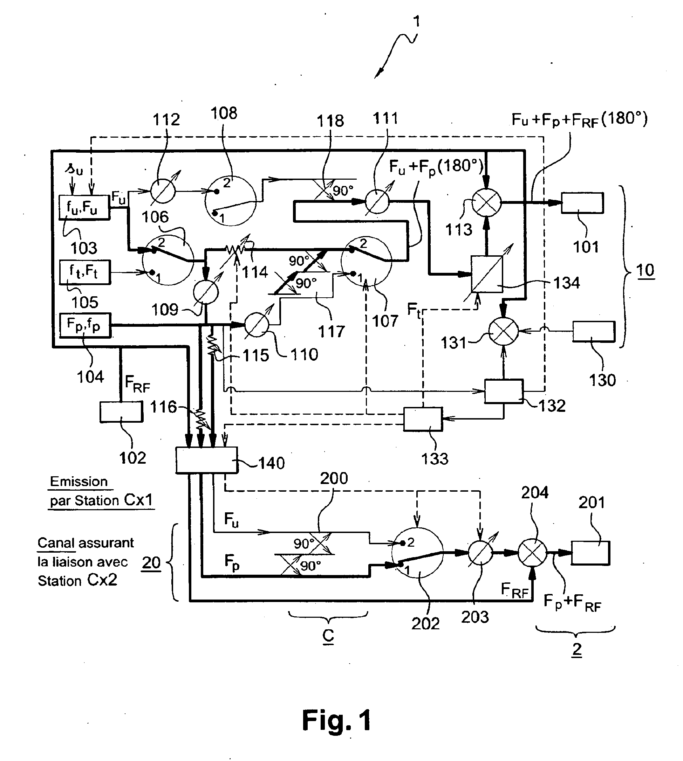

Le procède de communication selon la présente invention est mis en oeuvre par le dispositif 1 illustré sur les figures 1, 2 et 3. Les schémas de ces figures 1, 2, 3 illustrent un fonctionnement dynamique du dispositif de l'invention comme décrit par la suite.

Le procédé met en oeuvre les étapes suivantes :
L'allocation d'une partie de la bande de transmission à au moins un signal de service prédéfini, synchrone du signal utile en rythme symbole et modulant une fréquence porteuse fp de service, signal dénommé pilote Fₚ ;
La modulation par un signal d'entrée, dans une première station de connexion d'une fréquence porteuse utile fₚ pour générer le signal utile Fᵤ,
La distribution de la fréquence porteuse de transmission F_{RF} entre les deux stations de connexion ;
La distribution du signal pilote Fₚ entre les deux stations de connexion avec un déphasage de 180°;
L'observation des niveaux d'au moins le signal pilote Fₚ et le signal utile à la première station de connexion afin de détecter de mauvaises conditions de transmission;
Le basculement du signal utile Fᵤ vers la deuxième station de connexion avec un déphasage à 180° de manière à être en phase avec le signal utile de la première station de connexion;
Le remplacement du signal utile du premier site par le signal pilote déphasé de 180°.

Cette solution permet ainsi d'apporter une solution pour asservir les signaux issus des deux stations de connexion distantes sans perte de synchronisation de la fréquence porteuse de manière à pouvoir basculer de l'une à l'autre en cas de mauvaises conditions de transmission.

Selon une autre caractéristique de l'invention, l'asservissement du délai de la phase entre les signaux est réalisé sur des signaux en opposition de phase ce qui procuré une meilleure sensibilité dans la recombinaison. Dans la mesure où l'on sait asservir l'opposition de phase entre deux signaux avec une précision de 1 dB, même si les niveaux ne sont pas strictement identiques, on peut avoir, sur une voie à 180° de déphasage, une recombinaison avec une phase variant de moins de 5° (crête à crête).

Le dispositif 1 de mise en oeuvre comprend une partie émission/réception 10 implantée dans une première station de connexion CX1 pour assurer la voie montante du signal utile et une partie 20 assurant la liaison terrestre entre cette première station et une deuxième station CX2.

Ce signal utile Fᵤ de fréquence porteuse fᵤ, dénommé ci après signal utile est émis dans la bande de transmission par l'émetteur 101 de la station CX1. Avant émission, le signal utile passe de la fréquence intermédiaire à la fréquence de transmission F_{RF} par une opération de transposition en fréquence.

La première partie 10 du dispositif 1 comprend :
- un générateur de fréquence local 102 apte à générer la fréquence F_{RF} dénommée ci-après fréquence de référence qui permet d'effectuer la transposition de fréquence requise. Dans la réalisation pratique donnée en exemple la fréquence est de 29GHz pour une liaison à 30GHz.
- un générateur 103 réalisé par exemple par un modulateur DVB-S ou DVB-S2 produisant le signal utile Fᵤ en modulant une fréquence porteuse utile fₚ par le signal d'entrée Sᵤ
- un modulateur 104 générant un signal modulé, synchrone du signal utile, à une fréquence porteuse dénommée ci-après signal pilote Fₚ permettant comme on va voir dans la suite, d'obtenir un asservissement de la phase du signal émis entre la station 1 et la station 2 lors du basculement, la station 2 émettant en remplacement de la station 1.

- un modulateur 105 générant un signal modulé synchrone au signal utile, de fréquence porteuse fₜ Ce signal est dénommé ci-après signal de test Fₜ et est utilisé pour réaliser une calibration des chemins de la fréquence de transmission F_{RF}.
- trois commutateurs de basculement référencés respectivement 106, 107, 108 sont placés sur le chemin des signaux de sortie des modulateurs 103, 104, 105.
- Des déphaseurs d'asservissement 109, 110, 111, 112 sont prévus sur ces mêmes chemins. Le déphaseur 109 est placé après la sortie du commutateur 106, le déphaseur 110 est placé en sortie du modulateur 104 et le déphaseur 111 est placé après un couplage des sorties des commutateurs 107 et 108. Le déphaseur 112 est placé entre la sortie du modulateur 103 et une entrée du commutateur 108.
- un récepteur 130 adapté au canal de transmission dans lequel se trouve un signal permettant de détecter les conditions de mauvaise transmission liée en particulier aux conditions atmosphériques. Ce canal transporte notamment signal de test Fₜ et un signal de balise satellite c'est-à-dire un signal généré par le satellite.
- deux mélangeurs 113 et 131. Le mélangeur 113 est prévu pour mélanger les signaux issus du générateur local 102 et le signal de sortie du déphaseur 111 après son passage dans un circuit à retard variable 134. Le mélangeur 131 permet de mélanger le signal de référence F_{RF} au signal reçu par le récepteur 130.
- des atténuateurs variables 114, 115, 116 sont placés également sur ces chemins. L'atténuateur 114 est placé après la sortie du commutateur 106 et une entrée du commutateur 107. L'atténuateur 115 est placé en sortie du déphaseur 109. L'atténuateur 116 est placé après la sortie du modulateur 104.
- des coupleurs 117 et 118 sont également prévus. Le coupleur 117 est formé de deux coupleurs à 90° permettant d'obtenir un déphasage phi avantageusement égal à 180°.
- le circuit à retard variable 134 pour introduire un délai commandable, placé entre le déphaseur 111 et le mélangeur 113. Cet organe peut faire varier le retard sur son chemin par pas de l'ordre d'un fraction de symbole du signal utile.
- un démodulateur du signal pilote Fₚ et du signal de test Fₜ et détecteur de niveaux 132.
- un organe de décision 133 et de commande de basculement station CX1- station CX2.
- un organe de connexion 140 à une liaison terrestre.

La deuxième partie 20 du dispositif comprend un canal de transmission C assurant une liaison terrestre avec la deuxième station CX2 et en particulier avec l'émetteur 201. Ce canal de transmission comprend :
- un coupleur 200 réalisé par deux coupleurs à 90° permettant d'introduire un déphasage de 180° sur le signal pilote Fₚ pour couplage avec le signal utile Fᵤ ;
- un commutateur 202, pour recevoir sur une entrée de commutation la fréquence porteuse utile Fᵤ et sur une autre entrée de commutation la fréquence porteuse pilote Fₚ. Ce commutateur 202 est commandé par l'organe de commande 133 ;
- déphaseur à commande 203 reçoit le signal de sortie du commutateur 202 et est piloté par l'organe de commande 133 ; '
- un mélangeur 204 reçoit sur une entrée le signal de sortie du déphaseur 203 et sur une autre entrée le signal la fréquence porteuse de transmission c'est-à-dire la fréquence de référence F_{RF} ;
- le signal de sortie du mélangeur est appliqué à l'entrée du l'émetteur de la deuxième station 2.

En l'absence de difficulté de transmission c'est-à-dire lorsqu'aucune mauvaise condition de transmission n'a été détectée, les commutateurs sont dans la position illustrée sur la figure 1. En particulier, les commutateurs 106 et 107 sont positionnés sur leur entrée 2 de manière à ce qu' en sortie du commutateur 107 ont ait le signal utile Fᵤ couplé au signal pilote Fₚ ce dernier ayant subi un déphasage de 180°. Le commutateur 202 reçoit sur son entrée 1 le signal pilote F_{p.} L'émetteur 201 de la deuxième station reçoit ainsi le signal pilote Fₚ issu du modulateur 104, mélangé au signal généré par l'oscillateur local 105 c'est-à-dire la fréquence porteuse de transmission F_{RF}.

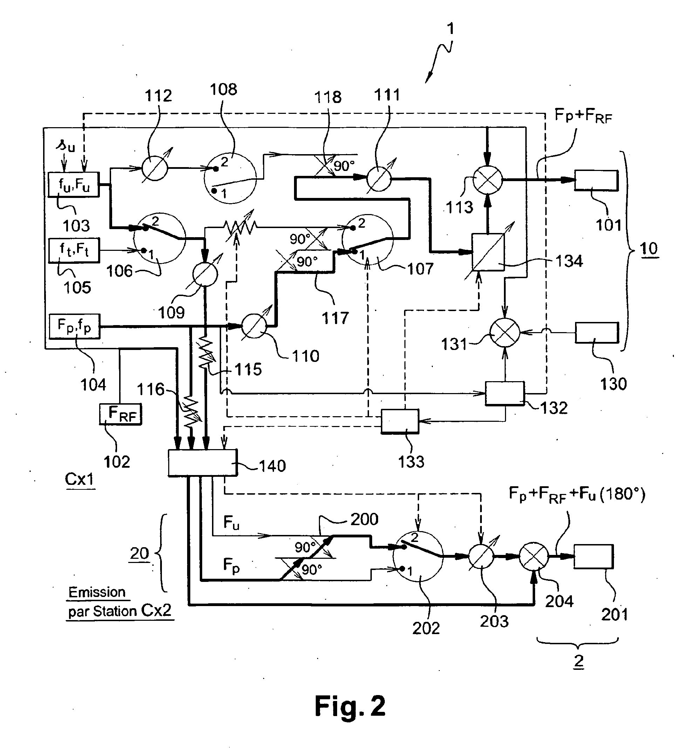

La figure 2 illustre le basculement ayant lieu lors d'une détection d'une dégradation des conditions de transmission. Le commutateur 202 piloté par l'organe 133, bascule sur sa deuxième entrée 2 qui reçoit le signal utile Fᵤ couplé au signal pilote Fₚ à travers les deux coupleurs à 90°.

Ainsi, le dispositif permet de basculer simultanément le signal utile sur l'autre site et la fréquence porteuse de transmission via une voie à 180° de déphasage. De cette façon, le signal utile transmis par le site CX2 se trouve automatiquement synchrone et en phase avec la porteuse utile du premier site CX1.

En outre le commutateur 107 est piloté par l'organe 133 de manière à se positionner sur son entrée 1 afin de recevoir le signal pilote Fₚ. De cette manière on remplace le signal utile Fᵤ pour le premier site, par le signal pilote Fₚ. Le dispositif est prêt à revenir à l'état initial lorsque les conditions de transmission redeviennent correctes.

Le dispositif de détection 132 est capable de détecter le seuil de pluie et de commander le basculement de site. Ce dispositif 132 est également relié au modulateur pour avoir un signal de référence, réplique du signal pilote. Il permet de se synchroniser sur la trame du signal reçu si besoin, et de détecter le réglage du déphaseur 111 et du circuit à retard variable (délai) 134 pour minimiser la puissance de signal pilote reçue par le récepteur 130. Avec cette information de puissance, l'organe 133 pilote les déphaseurs d'asservissement 111 et 203, le circuit à retard variable 134, les atténuateurs pour équilibrer les niveaux 114 et 115, les commutateurs de basculement 107 et 202.

Lorsque le système décrit précédemment est mis en service, on le place dans l'état indiqué sur la figure 1. On voit ainsi, qu'avec ces positions de commutateurs, le signal utile Fᵤ et le signal pilote Fₚ sont envoyées sur l'émetteur 101. Seul le signal pilote Fₚ est envoyé sur l'émetteur 201 et les deux signaux ont une phase de 180° avec l'atténuation requise obtenue par les atténuateurs 110 et 203 pilotés par le dispositif 133. En pratique, l'organe de commande 133 pilote alors seulement le déphaseur 203 et le circuit à retard 134 pour obtenir un minimum de puissance sur le signal pilote.

Moyennant le fait que la station possède des antennes bien dimensionnées (pour ses autres fonctions), on obtient un rapport puissance de signal utile sur bruit C/N minimum d'environ 20 dB pour une porteuse normale, la détection du zéro a donc une dynamique de cet ordre.

De plus, il s'agit d'un pilote (de type séquence PN connue), on peut donc faire fonctionner l'estimateur sur plusieurs symboles et gagner aussi en précision. Le niveau relatif des atténuateurs 114.et 115 est ajusté pour avoir un gain sur le site CX2 un peu plus faible que le site CX1 (env. 4 dB).

Lorsque la décision de basculement est prise on effectue la séquence suivante :
- Basculement du commutateur 107 (coupure du signal utile sur le site CX1),
- Basculement du commutateur 202 (émission du signal utile sur le site 2, en phase),
- Ajustement de l'atténuateur 115 pour avoir le niveau de PIRE requis (ULPC).

Si l'intervalle de temps entre les 2 basculements est de l'ordre de la durée d'un symbole, on limite le risque de perte d'information, éventuellement, il n'y a pas de perte. En tout cas, la synchronisation des démodulateurs n'est perturbée que de quelques degrés (+/- 5° environ) et la boucle de reconstruction de porteuse, récupère ce biais au bout d'au plus 1000 symboles.

Pour revenir à l'état initial, le dispositif assure les fonctions symétriques, en particulier avec le déphaseur 111, la séquence inverse de celle qui vient d'être décrite est mise en oeuvre.

La première partie 10 du dispositif 1 qui vient d'être décrit comprend en outre une partie ayant pour fonction le calibrage des chemins de la fréquence de transmission F_{RF} distribuée sur les deux stations de connexions.

Cette partie d'équilibrage des chemins comporte le modulateur de test 105 ainsi que le commutateur 108, les déphaseurs 109, 112 et l'atténuateur 116. En effets ces éléments servent à calibrer l'équilibre des chemins RF (fréquence porteuse de transmission) en introduisant dans le signal émis, en plus, un autre signal de service dénommé signal de test Fₜ. Ce signal est également en bord de bande, sans que cela ne perturbe la transmission. Le signal de test Fₜ est généré par le modulateur 105.

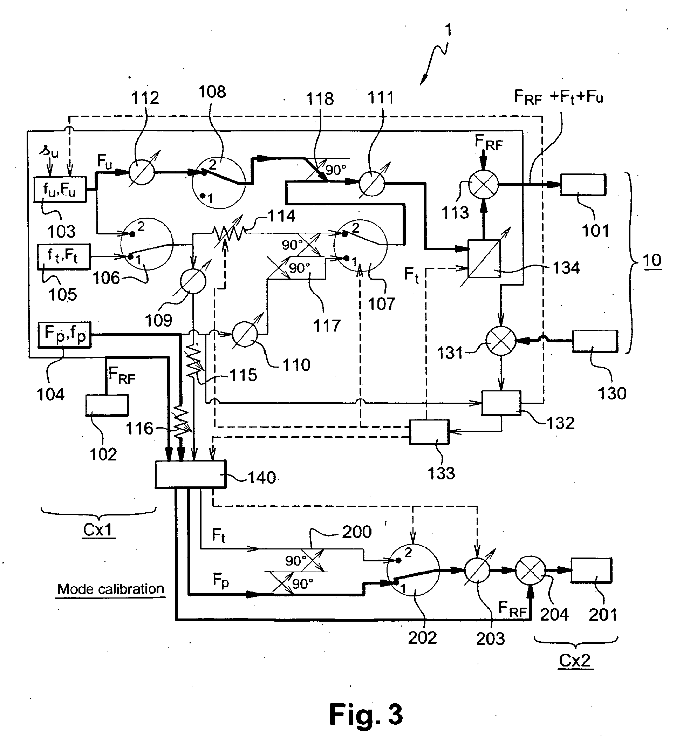

Le schéma de la figure 3 illustre le fonctionnement du dispositif de l'invention en mode calibration. Les différents commutateurs sont dans la position indiquée par cette figure.

Le fonctionnement en mode calibration peut être déclenché en dehors d'un fonctionnement en diversité d'émission. Ce mode est mis en fonction périodiquement sans perturber la mission. Le signal de retour est traité par le démodulateur 132 et interprété par l'organe de commande 133 afin de régler les déphaseurs 109, 1012 et les atténuateurs 114 et 115.

Ce mode consiste pour la première station CX1, à coupler le signal utile Fᵤ au signal de test Fₜ et l'émettre à la fréquence porteuse de transmission F_{RF}.

La fréquence porteuse de transmission F_{RF} et le signal pilote sont distribués à la deuxième station de connexion CX2.

L'organe de commande 133 pilote les commutateurs 107 et 202 de manière à passer en mode émission par la deuxième station de connexion CX2, qui reçoit alors le signal de test Fₜ à la place du signal utile, couplé au signal pilote Fₚ déphasé de 180° (modulateur 202 bascule sur son entrée 2).

Le signal reçu par le récepteur 130 est traité pour contrôler la valeur du déphasage et régler les valeurs des déphaseurs et atténuateurs.

## Revendications

1. Procédé d'émission de signaux dits signaux utiles via un satellite au moyen de stations de connexions, l'émission se faisant dans une bande de transmission définie, **caractérisé en ce qu'**il comprend pour une première station de connexion les étapes suivantes :
- la génération d'un premier signal de service sur une fréquence porteuse de service dénommé signal pilote, et la transmission de ce signal pilote à au moins une deuxième station de connexion ;
- l'utilisation de ce signal pilote pour assurer une synchronisation de phase et temporelle des signaux afin de mettre en oeuvre une diversité en émission c'est-à-dire de basculer l'émission du signal utile par cette deuxième station de connexion sans perte de synchronisation de phase entre les deux stations.

2. Procédé d'émission selon la revendication 1, **caractérisé en ce qu'**il consiste à allouer une partie de la bande de transmission au ou aux signaux de service notamment au signal pilote.

3. Procédé d'émission selon les revendications 1 ou 2 dans lequel la première station de connexion génère - un signal utile par modulation d'une fréquence porteuse à partir d'un signal d'entrée et - une fréquence porteuse de transmission ; **caractérisé en ce qu'**il comprend les étapes suivantes :
- La distribution de la fréquence porteuse de transmission entre les deux stations de connexion,
- La distribution du signal pilote entre les deux stations de connexion avec un déphasage de 180°;
- L'observation des niveaux d'au moins le signal pilote et le signal utile à la première station de connexion afin de détecter de mauvaises conditions de transmission;
- Le basculement du signal utile vers la deuxième station de connexion avec un déphasage à 180° de manière à être en phase avec la porteuse utile de la première station de connexion;
- Le remplacement de la fréquence porteuse utile de la première station par le signal pilote déphasé de 180°.

4. Procédé d'émission selon l'une quelconque des revendications précédentes, **caractérisé en ce qu'**il comprend en outre la génération d'un deuxième signal de service dénommé signal de test pour permettre de passer en mode calibration, ce mode consistant réaliser un équilibrage des chemins de la fréquence porteuse de transmission distribuée sur la première et la deuxième station de connexion.

5. Procédé d'émission selon la revendication 4, **caractérisé en ce que** le mode calibration est déclenché en dehors d'un passage en diversité d'émission, et consiste à :
- coupler le signal utile au signal de test et l'émettre par la première station de connexion à la fréquence porteuse de transmission,
- distribuer la fréquence porteuse de transmission et le signal pilote à la deuxième station de connexion,
- basculer en mode émission par la deuxième station de connexion, qui reçoit alors le signal de test à la place du signal utile, couplée au signal pilote déphasée de 180°,
- traitement du signal retour pour contrôler la valeur du déphasage.

6. Système d'émission de signaux dits signaux utiles, via un satellite au moyen de stations de connexion, l'émission se faisant dans une bande de transmission définie, **caractérisé en ce qu'**il comprend des moyens de mise en oeuvre de la diversité en émission entre au moins deux stations de connexion comprenant :
- des moyens de génération d'un premier signal de service dénommé signal pilote,
- des moyens de distribution de ce signal pilote sur les deux stations de connexion pour assurer une synchronisation de phase et temporelle des signaux permettant ainsi de pouvoir basculer l'émission du signal utile par la deuxième station de connexion sans perte de synchronisation de phase entre les deux stations,
- des moyens de basculement en émission par la deuxième station.

7. Système d'émission selon la revendication 6, **caractérisé en ce que** les moyens de distribution comportent :
- un canal assurant la liaison avec la deuxième station de connexion,
- un déphaseur suivi d'un circuit à retard variable dans la première station de connexion pour opérer un déphasage et introduire un délai définis sur le signal pilote transmis avec le signal utile mélangé à la fréquence de transmission à l'émetteur de cette station.
- un déphaseur dans le canal de liaison pour opérer le même déphasage sur le signal pilote lorsque ce dernier est couplé au signal utile pour être transmis à l'émetteur de la deuxième station de connexion.

8. Système d'émission selon la revendication 7, **caractérisé en ce que** les moyens de basculement (diversité en émission) comportent :
- un premier commutateur dans la première station de connexion permettant la transmission du signal pilote couplé au signal utile ou la transmission du signal pilote à l'émetteur de cette première station ;
- un deuxième commutateur dans le canal de liaison pour la transmission du signal pilote couplé au signal utile ou la transmission du signal pilote à l'émetteur de la deuxième station de connexion ;
- un organe de commande de ces deux commutateurs.

9. Système d'émission selon la revendication 7, **caractérisé en ce que** les déphaseurs comprennent chacun, deux coupleurs à 90° de manière à obtenir une opposition de phase entre les signaux distribués aux deux stations de connexion.

10. Système d'émission selon les revendications 6 à 9, **caractérisé en ce qu'**il comprend en outre des moyens de génération d'un deuxième signal de service dénommé fréquence signal de test ; des moyens de distribution de ce signal de test sur la première et la deuxième station de connexion, et des moyens de basculement en mode calibration, tous ces moyens permettant de réaliser un équilibrage des chemins de la fréquence porteuse de transmission distribuée sur la première et la deuxième station de connexion.

11. Station de connexion comprenant un émetteur apte à émettre un signal utile dans une bande de transmission définie, **caractérisée en ce qu'**elle comprend :
- des moyens de génération d'au moins un première signal de service dénommé signal pilote,
- des moyens de distribution de ce signal pilote vers son émetteur et vers un canal de liaison à au moins une autre station de connexion,
- des moyens de transmission de ce signal pilote dans la bande de transmission définie,
- des moyens de basculement en émission par la deuxième station.

12. Station de connexion selon la revendication 11, **caractérisée en ce que** les moyens de distribution comportent un premier commutateur permettant la transmission du signal pilote couplé au signal utile ou la transmission du signal pilote, à l'émetteur.

## Claims

1. A process for emitting signals, referred to as useful signals, via a satellite by means of connection stations, which emission is undertaken in a defined transmission band, **characterised in that** it comprises for a first connection station the following steps:
- generating a first service signal on a service carrier frequency referred to as a pilot signal and transmitting said pilot signal to at least one second connection station;
- using said pilot signal to ensure phase and time synchronisation of the signals so as to implement emission diversity, that is, changing the emission of the useful signal by said second connection station without loss of phase synchronisation between the two stations.

2. The emitting process according to claim 1, **characterised in that** it consists in allocating part of the transmission band to the service signal(s), notably to the pilot signal.

3. The emitting process according to claim 1 or 2, wherein the first connection station generates a useful signal by modulation of a carrier frequency from an input signal and a transmission carrier frequency, **characterised in that** it comprises the following steps:
- distributing the transmission carrier frequency between the two connection stations,
- distributing the pilot signal between the two connection stations with a phase shift of 180°,
- observing the levels of at least the pilot signal and the useful signal at the first connection station so as to detect poor transmission conditions,
- changing the useful signal to the second connection station with a phase shift of 180° so as to be in phase with the useful carrier of the first connection station,
- replacing the useful carrier signal of the first station with the pilot signal phase shifted by 180°.

4. The emitting process according to any one of the preceding claims, **characterised in that** it further comprises generating a second service signal, referred to as a test signal, to allow changing into a calibration mode, which mode consists in balancing the paths of the transmission carrier frequency distributed over the first and second connection stations.

5. The emitting process according to claim 4, **characterised in that** the calibration mode is triggered outside of a passage in emission diversity, and consists in:
- coupling the useful signal with the test signal and emitting the coupled signal via the first connection station to the transmission carrier frequency,
- distributing the transmission carrier frequency and the pilot signal to the second connection station,
- changing into emission mode by the second connection station, which then receives the test signal instead of the useful signal, coupled to the pilot signal phase shifted by 180°,
- processing the return signal to control the value of the phase shift.

6. A system for emitting signals, referred to as useful signals, via a satellite by means of connection stations, which emission is undertaken in a defined transmission band, **characterised in that** it comprises means for implementing emission diversity between at least two connection stations comprising:
- means for generating a first service signal referred to as a pilot signal,
- means for distributing said pilot signal over the two connection stations to ensure phase and time synchronisation of the signals thus allowing tripping of the emission of the useful signal by the second connection station without loss of phase synchronisation between the two stations,
- means for changing into emission by the second station.

7. The emitting system according to claim 6, **characterised in that** the distribution means comprise:
- a channel for ensuring the connection with the second connection station,
- a phase shifter followed by a variable delay circuit in the first connection station to operate phase shifting and introduce a defined delay on the pilot signal transmitted with the useful signal mixed at the transmission frequency to the emitter of this station,
- a phase shifter in the connecting channel to operate the same phase shifting on the pilot signal when said signal is coupled to the useful signal so as to be transmitted to the emitter of the second connection station.

8. The emitting system according to claim 7, **characterised in that** the tripping means (emission diversity) comprise:
- a first switch in the first connection station allowing the transmission of the pilot signal coupled to the useful signal or the transmission of the pilot signal to the emitter of said first station,
- a second switch in the link channel for transmission of the pilot signal coupled to the useful signal or transmission of the pilot signal to the emitter of the second connection station,
- a control component for the two switches.

9. The emitting system according to claim 7, **characterised in that** the phase shifters each comprise two 90° couplers so as to obtain phase opposition between the signals distributed to the two connection stations.

10. The emitting system according to any one of claims 6 to 9, **characterised in that** it further comprises means for generating a second service signal, referred to as the test frequency signal, means for distributing said test signal over the first and second connection stations and means for changing into calibration mode, all of these means allowing balancing of the paths of the transmission carrier frequency distributed over the first and second connection stations.

11. A connection station comprising an emitter designed to emit a useful signal in a defined transmission band, **characterised in that** it comprises:
- means for generating at least one first service signal, referred to as the pilot signal,
- means for distributing said pilot signal to its emitter and to a link channel on at least one other connection station,
- means for transmitting said pilot signal in the defined transmission band,
- means for changing into emission by the second station.

12. The connection station according to claim 11, **characterised in that** the distribution means comprise a first switch which allows transmission of the pilot signal coupled to the useful signal or transmission of the pilot signal to the emitter.

## Patentansprüche

1. Verfahren zum Senden von Signalen, Nutzsignale genannt, über einen Satelliten mittels Verbindungsstationen, wobei das Senden in einem definierten Übertragungsband erfolgt, **dadurch gekennzeichnet, dass** es für eine erste Verbindungsstation die folgenden Schritte beinhaltet:
- Erzeugen eines ersten Service-Signals auf einer Service-Trägerfrequenz, Pilotsignal genannt, und Übertragen dieses Pilotsignals zu wenigstens einer zweiten Verbindungsstation;
- Verwenden dieses Pilotsignals zum Gewährleisten einer Phasen- und Zeitsynchronisation der Signale, um Sendediversität zu implementieren, das heißt das Senden des Nutzsignals durch diese zweite Verbindungsstation ohne Verlust an Phasensynchronisation zwischen den beiden Stationen umzuschalten.

2. Sendeverfahren nach Anspruch 1, **dadurch gekennzeichnet, dass** es darin besteht, einen Teil des Übertragungsbandes dem/den Service-Signal(en), insbesondere dem Pilotsignal zuzuordnen.

3. Sendeverfahren nach Anspruch 1 oder 2, wobei die erste Verbindungsstation ein Nutzsignal durch Modulation einer Trägerfrequenz von einem Eingangssignal und eine Übertragungsträgerfrequenz erzeugt, **dadurch gekennzeichnet, dass** es die folgenden Schritte beinhaltet:
- Verteilen der Übertragungsträgerfrequenz zwischen den beiden Verbindungsstationen,
- Verteilen des Pilotsignals zwischen den beiden Verbindungsstationen mit einer Phasenverschiebung von 180°,
- Beobachten der Pegel wenigstens des Pilotsignals und des Nutzsignals an der ersten Verbindungsstation, um schlechte Übertragungsbedingungen zu erkennen,
- Wechseln des Nutzsignals zur zweiten Verbindungsstation mit einer Phasenverschiebung von 180°, so dass es phasengleich mit dem Nutzträger der ersten Verbindungsstation ist,
- Ersetzen der Nutzträgerfrequenz der ersten Station durch das um 180° phasenverschobene Pilotsignal.

4. Sendeverfahren nach einem der vorherigen Ansprüche, **dadurch gekennzeichnet, dass** es ferner das Erzeugen eines zweiten, Testsignal genannten Service-Signals umfasst, um den Eintritt in einen Kalibrationsmodus zuzulassen, der darin besteht, die Pfade der Übertragungsträgerfrequenz über die erste und zweite Verbindungsstation verteilt auszugleichen.

5. Sendeverfahren nach Anspruch 4, **dadurch gekennzeichnet, dass** der Kalibrationsmodus außerhalb einer Passage in Sendediversität ausgelöst wird und besteht im:
Koppeln des Nutzsignals mit dem Testsignal und Senden desselben durch die erste Verbindungsstation mit der Übertragungsträgerfrequenz,
- Verteilen der Übertragungsträgerfrequenz und des Pilotsignals zur zweiten Verbindungsstation,
- Wechseln in den Sendemodus durch die zweite Verbindungsstation, die dann das Testsignal anstatt des Nutzsignals empfängt, gekoppelt mit dem um 180° phasenverschobenen Pilotsignal,
- Verarbeiten des Rückkehrsignals zum Regeln des Wertes der Phasenverschiebung.

6. System zum Senden von Nutzsignale genannten Signalen über einen Satelliten mittels Verbindungsstationen, wobei das Senden in einem definierten Übertragungsband erfolgt, **dadurch gekennzeichnet, dass** es Mittel zum Implementieren der Sendediversität zwischen wenigstens zwei Verbindungsstationen umfasst, die Folgendes umfassen:
- Mittel zum Erzeugen eines ersten Service-Signals, Pilotsignal genannt,
- Mittel zum Verteilen des Pilotsignals über die beiden Verbindungsstationen zum Gewährleisten von Phasen- und Zeitsynchronisation der Signale, so dass das Senden des Nutzsignals durch die zweite Verbindungsstation ohne Phasensynchronisationsverlust zwischen den beiden Stationen umgeschaltet werden kann,
- Mittel zum Wechseln auf Senden durch die zweite Station.

7. Sendesystem nach Anspruch 6, **dadurch gekennzeichnet, dass** das Verteilungsmittel Folgendes umfasst:
- einen Kanal zum Gewährleisten der Verbindung mit der zweiten Verbindungsstation,
- einen Phasenschieber, gefolgt von einer variablen Verzögerungsschaltung in der ersten Verbindungsstation zum Anwenden einer Phasenverschiebung und zum Einbringen einer definierten Verzögerung auf das Pilotsignal, das mit dem Nutzsignal, gemischt auf der Übertragungsfrequenz, zum Sender dieser Station übertragen wird.
- einen Phasenschieber im Verbindungskanal, um dieselbe Phasenverschiebung auf das Pilotsignal anzuwenden, wenn das Signal mit dem Nutzsignal gekoppelt ist, um zum Sender der zweiten Verbindungsstation übertragen zu werden.

8. Sendesystem nach Anspruch 7, **dadurch gekennzeichnet, dass** die Umschaltmittel (Sendediversität) Folgendes umfassen:
- einen ersten Schalter in der ersten Verbindungsstation, der die Übertragung des mit dem Nutzsignal gekoppelten Pilotsignals oder die Übertragung des Pilotsignals zum Sender dieser ersten Station zulässt,
- einen zweiten Schalter im Verbindungskanal zum Übertragen des mit dem Nutzsignal gekoppelten Pilotsignals oder zum Übertragen des Pilotsignals zum Sender der zweiten Verbindungsstation,
- ein Steuerelement für diese beiden Schalter.

9. Sendesystem nach Anspruch 7, **dadurch gekennzeichnet, dass** die Phasenschieber jeweils zwei 90°-Koppler umfassen, um einen Phasengegensatz zwischen den Signalen zu erhalten, die zu den beiden Verbindungsstationen verteilt werden.

10. Sendesystem nach einem der Ansprüche 6 bis 9, **dadurch gekennzeichnet, dass** es ferner Mittel zum Erzeugen eines zweiten Service-Signals, Testfrequenzsignal genannt, Mittel zum Verteilen dieses Testsignals zur ersten und zweiten Verbindungsstation und Mittel zum Wechseln in den Kalibrationsmodus umfasst, wobei alle diese Mittel ein Ausgleichen der Pfade der Übertragungsträgerfrequenz, die über die erste und zweite Verbindungsstation verteilt ist, ermöglichen.

11. Verbindungsstation, die einen Sender zum Senden eines Nutzsignals in einem definierten Übertragungsband umfasst, **dadurch gekennzeichnet, dass** sie Folgendes umfasst:
- Mittel zum Erzeugen wenigstens eines ersten Pilotsignal genannten Service-Signals,
- Mittel zum Verteilen dieses Pilotsignals zu seinem Sender und zu einem Verbindungskanal auf wenigstens einer anderen Verbindungsstation,
- Mittel zum Übertragen des Pilotsignals in dem definierten Übertragungsband,
- Mittel zum Wechseln auf Senden durch die zweite Station.

12. Verbindungsstation gemäß Anspruch 11, **dadurch gekennzeichnet, dass** das Verteilungsmittel einen ersten Schalter umfasst, der die Übertragung des mit dem Nutzsignal gekoppelten Pilotsignals oder die Übertragung des Pilotsignals zum Sender umfasst.
